Europäisches Patentamt

European Patent Office

Office européen des brevets

(19)

(11) Publication number: **0 425 320 A2**

# EUROPEAN PATENT APPLICATION

(12)

(21) Application number: **90311794.3**

(22) Date of filing: **26.10.90**

(51) Int. Cl.⁵: **G06F 15/16, G06F 9/46**

(30) Priority: **26.10.89 JP 277334/89**

(43) Date of publication of application:
**02.05.91 Bulletin 91/18**

(84) Designated Contracting States:
**DE FR GB**

(71) Applicant: **International Business Machines Corporation**
**Old Orchard Road**
**Armonk, N.Y. 10504(US)**

(72) Inventor: **Matsumoto, Takashi Kohposansyain**
**203 goh**
**9 banchi 13 goh Tamagawa 4 tyohme**
**Setagaya-ku, Tokyo-to(JP)**

(74) Representative: **Bailey, Geoffrey Alan**
**IBM United Kingdom Limited Intellectual**
**Property Department Hursley Park**
**Winchester Hampshire SO21 2JN(GB)**

(54) **Multiprocessor system and process synchronisation method therefor.**

(57) A method and apparatus for achieving processor synchronisation in a multiprocessor environment are described. Each processor refers to synchronisation information stored in a memory shared betwen the processors. Depending on the information in this memory, a re-scheduling request may be issued.

Processes waiting for
allocation of processors

FIG. 11

## MULTIPROCESSOR SYSTEM AND PROCESS SYNCHRONISATION METHOD THEREFOR

The invention relates to a multiprocessor system, in particular relating to a multiprocessor system capable of reducing overheads due to process synchronisation among processors.

Advance of VLSI technique has provided multiprocessor systems each having many processors; also parallel processing is getting important, which enables tasks to be performed rapidly by using a plurality of processors. In such multiprocessor systems sometimes one processor uses the result of a process by another processor, and acknowledgement of the completion of that process, that is, synchronisation, is required for this purpose. In order for a plurality of processors to operate in cooperation with one another, synchronisation among processors is indispensable.

Conventional prior art synchronisation techniques will now be described.

In a computing system, control of real hardware resources is performed by an operating system (hereinafter referred to as "OS"). A user or programmer describes operations by using an idea of "process" which virtualizes a real processor. Real processors are allocated to processes, one processor to one process, under control of an OS to perform the operations. Such allocation is referred to as "process scheduling" ( hereinafter referred to as simply "scheduling"). In parallel processing, a plurality of processes which should operate in cooperation with one another are created, and the parallel processing proceeds keeping synchronisation among the processes. Conventionally the following two methods have been employed for the synchronisation. The first is to perform synchronisation through an OS, and the second is through a shared memory among processes. For synchronisation, a shared entity is required, which enables exchanges of information among processes synchronising with one another. The first method uses an OS as the entity, and the second uses a memory.

Next the problems associated with the prior techniques are described.

In the case where synchronisation is achieved through an OS, a process which does not establish synchronisation is replaced from the allocated processor, and enters a sleeping state, and the freed processor is allocated to another process. In such a way, processor resources are effectively used. The synchronisation through an OS however causes a heavy overhead, and the repetition of entering a sleeping state and receiving allocation results in considerable degradation of performance. If the granularity of a program is large enough, the overhead can be neglected. In most cases it is not however negligible.

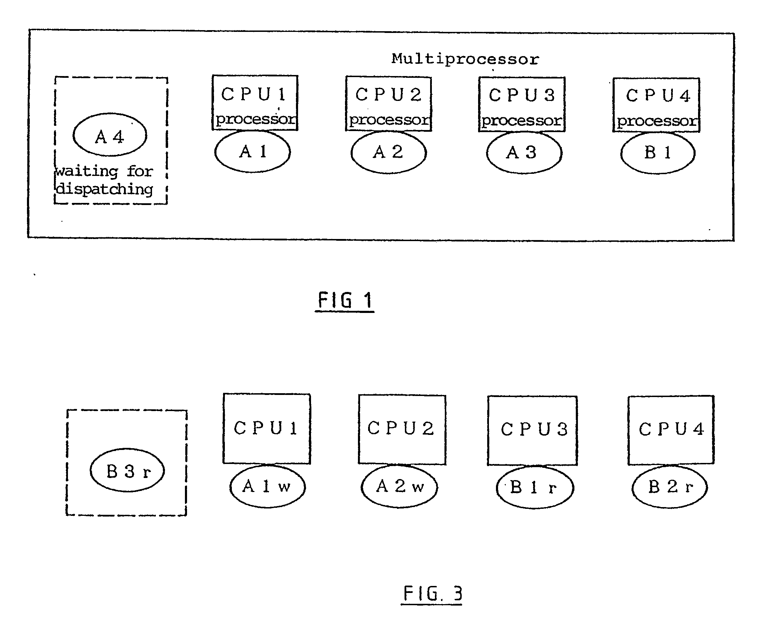

In the case where synchronisation is achieved by busy waiting using a shared memory rather using an OS, the above overhead and problem can be avoided . However another problem can be raised. As above mentioned an OS dispatches one process to one processor at a time. During one scheduling operation the OS can not usually assign a plurality of processes to a plurality of processors at a time. Consider a program where a plurality of processes are created for parallel processing and they operate in synchronisation with one another. Depending on the scheduling operation, some process in the group can be dispatched to the processors and the remaining processes can be in a waiting state for dispatching. In this case, a process can try to establish synchronisation with another process which is not scheduled to any processor and then ineffective busy waiting can repeat. An example is a case where processes are dispatched to processors as shown in Figure 1, and the processes A1, A2, and A3 are in a loop of busy waiting synchronisation, waiting to use the operational result of the process A4. In such a case, while cpu time is consumed, the program will not proceed any more until the process A4 gets dispatched to one of the actual processors upon re-scheduling by a time slice operation or the like. In addition the scheduling problem, when a barrier synchronisation where a plurality of processes each wait for the others at a point, is performed through a shared memory; exclusive memory accesses for the synchronisation occur concentratedly on the multiprocessor, and then the overhead due to contention of data communication paths or the like can be raised.

As implied from the above, process synchronisation and scheduling are much correlated. For applications or certain kinds of parallel processing programs, adjustment of scheduling can improve the performance. In a conventional OS, however all the processes are scheduled based on the same algorithm, so that the scheduling can not be adapted to individual processes.

The following are prior art references related to the present invention.

(1) "Stellix: UNIX for a Graphics Supercomputer", Proceedings of the Summer 1988 USENIX Conference, June 20-24, 1988, San Francisco California USA, USENIX Association, pp.321-330, Thomas J. Teixeira & Robert F. Gurwitz.

This article discloses that a fault signal is generated by hardware when all the processes are in a waiting state during synchronisation operation by a special instruction stream for synchronisation.

(2) IBM Technical Disclosure Bulletin Vol. 32 No. 1 June 1989 pp.260-262, "DEVICE THAT PROVIDES FOR CONTENTION-FREE BARRIER SYNCHRONIZATION IN A MULTIPROCESSOR".

(3) IBM Technical disclosure Bulletin Vol. 31 No. 11 April 1989 pp.382-389, "LOW-COST DEVICE FOR CONTENTION-FREE BARRIER SYNCHRONIZATION".

The above articles (2) and (3) disclose hardware configurations for performing a barrier synchronisation concentratedly.

(4) H. S. Stone, " High-Performance Computer Architecture", Addison-Wesley, Reading, Massachusetts,1987.

This text book provides a tutorial explanation about barrier synchronisation in general.

The prior art, therefore, does not provide a multiprocessor system capable of suppressing the overheads due to synchronisation and ineffective scheduling among processors.

Accordingly the present invention provides a process synchronisation method for a multiprocessor system having a plurality of processors and a shared memory, wherein each process checks for one or more synchronisation variables stored in said shared memory while that process remains in a synchronisation waiting state, said process stopping said synchronisation waiting state when said variables indicate establishment of said synchronisation, and said process continuinng said synchronisation waiting state when said variables indicate incompletion of said synchronisation, characterised in that each of said processes further performs the following steps while that process remains in said synchornisation waiting state:
accessing information related to processor resources stored in said shared memory, to determine whether or not one or more predetermined conditions in respect to difficulties in establishment of synchronisation is fulfilled;
continuing said synchronisation waiting state when none of said conditions is determined to be fulfilled; and,
requesting re-scheduling when one or more of said conditions is determined to be fulfilled.

The present invention also provides a multiprocessor system wherein synchronisation among processes executed on a plurality of processors is performed through each of said processes checking for one or more synchronisation variables stored in a shared memory, characterised by:
requesting means for each of said processors for accessing, while a process executed on said processor remains in a synchronisation waiting state, information related to processor resources stored in said shared memory, to send a re-scheduling request when one or more predetermined conditions in respect to difficulties in establishment of said synchronisation is fulfilled; and,
scheduling means responsive to said re-scheduling request for performing re-scheduling of processes.

Therefore, according to one aspect of the present invention, synchronisation by a shared memory is employed to decrease the overhead, and information about system processor resources (including information on dispatching of processes to processors, on grouping of processes, and on process synchronisation) is made available from processes. A process in a loop for synchronisation waiting, checks the information about the system processor resources in addition to synchronisation variables , and after that when the resultant check determines that synchronisation can not be established in a short time under that situation, the process stops the busy waiting operation, and returns control to the scheduler so that the scheduler does re-scheduling to change the dispatching of processes.

According to another aspect of the invention, a dedicated register is prepared for each processor for barrier synchronisation wherein a plurality of processes are waiting at a point simultaneously, and a dedicated communication path is also provided for exchanging information among the registers, and then the overhead of barrier synchronisation is reduced.

Further hardware to support checking for processor resource information may be provided to reduce the overhead additionally caused by the checking. In this case initiation of re-scheduling is signaled by interruption.

Further the scheduler may be user-customizable so as to enable suitable re-scheduling. In addition the scheduler may be configured in such a hierarchical manner that the customization under the control of an OS is achieved. In other words, each group of processes operating in parallel to perform an application is under control of a user scheduler for that application. In addition, in order to reduce the overhead of interruption indicative of re-scheduling and in order to enable the use scheduler to communicate with other processors asynchronously with lesser overhead, interruption by processors may be hierarchized and interruption of lower priorities may be made available to the user. In this configuration, when interruption occurs during the running of the user application( during user mode operation), control may be only transferred to an interruption program set by the user in advance, and need not be transferred to the OS( kernel mode operation).

In order that the invention may be fully understood a preferred embodiment htereof will now be described, by way of example only, with reference to the accompanying drawings in which:
Figure 1 is a diagram illustrating a conventional method for dispatching processes to processors.

Figures 2 to 5 are diagrams illustrating conditions for re-scheduling a request used in one preferred embodiment of the invention.

Figure 6 is a flow chart describing the above embodiment.

Figure 7 is a flow chart describing the corresponding part of the conventional method to the flow shown in Figure 6.

Figures 8 to 10 are diagrams describing modified versions of the above preferred embodiment of Figure 6.

Figure 11 is a diagram describing a further modified version of the modified embodiment of Figure 10.

Figures 12 and 13 are block diagrams illustrating detailed configuration of the embodiment shown in Figure 6.

Figure 14 is a flow chart illustrating the configuration of Figure 12.

The overheads due to synchronisation are reduced by employing the busy waiting approach using shared memory or the like ( use of an OS causes overhead increase as stated before). Accordingly the following two problems occur as described in the above.

(1) One or more processes each performing ineffective waiting for synchronisation are dispatched to processors, and then waste processor resources.

(2) During a barrier synchronisation, exclusive memory accesses are concentrated, and contention for a data path causes an overhead.

First, the problem (1) is detailed and the direction to resolve it is shown. Consider a case where a plurality of processes are together performing a certain operation in cooperation with one another ( parallel processing). And assume that on the way of the operation, processes other than one are in a waiting state for synchronisation. And further assume that the one process is off a waiting state, and that the other processes are waiting for the former process outputting the calculation result. Also assume that the number of the processes is larger than one of the processors, so that not all of the processes can be dispatched to the processors simultaneously. In that situation, since synchronisation is achieved through a shared memory, the OS can not determine whether or not a process is at a waiting state. Therefore, depending on scheduling, only the processors waiting for synchronisation can be dispatched, and the process which is not at a synchronisation waiting state and should be performed at the highest priority can be waiting for dispatch . In that case, the processor resources continue to be wasted, until the process not waiting for synchronisation gets dispatched to a processor upon the occurrence of re-scheduling by timer interruption which occurs at a certain interval.

To resolve the waste, an event has to be determined where all the processors are occupied with processes waiting for synchronisation. Accordingly, in a busy waiting loop of waiting for synchronisation, not only synchronisation variables but also information related to system processor resources are checked . Depending on the checking result, under some situations the operation is stopped, the control is transferred to the OS, and re-scheduling is performed to change the dispatching of processes to processors. In that approach, the number of processes doing ineffective synchronisation waiting can be reduced, and then the system processor resources can be effectively used. A method for checking such situations and a method of re-scheduling will be described in more detail below.

Next, the problem of concentrated exclusive memory accesses upon barrier synchronisation will be addressed and an approach to resolve it will be proposed. When a barrier synchronisation is achieved in a system having N processors by using one synchronisation variable, at least N times of exclusive manipulation to the variable is required. Memory operations for that manipulation are serialized, so that the overhead increases as a function with the number of N. In particular, the overhead problem will be serious when granularity of processes in barrier synchronisation are of almost the same size and all the processes are dispatched to processors simultaneously (that is, there is no process waiting for dispatching).

To avoid the above overhead, a variable dedicated for barrier synchronisation is provided as a dedicated register (preferably a flag is used) for each processor, and modification among the registers is achieved through a dedicated communication path for synchronisation information (preferably signal lines of a broadcast type are used). Using those facilities, barrier synchronisation can be achieved without increase of communication amount on a data communication path. Of course, when one or more processes are waiting for dispatching, an operation according to the problem resolving approach (1) is performed. A detailed configuration will be described below.

Conditions for switching processes and a detecting method for the conditions will now be described.

Now conditions that a process waiting for synchronisation gives up the dispatching by itself are described and then information about system processor resources required to check for the conditions is described. Here the idea of "a group of processors", to manage processor resources effectively is introduced. Basically processes in synchronisation with one another by a shared memory constitute a group. In other words, processes each belonging to different groups don't keep busy waiting synchronisation with one another using the shared memory. Processors each belong to the groups of the processes running the processors. Processors to which one group of processes are dispatched constitute a group of processors. In Figure 1, processes A1, A2, A3, and A4 constitute one group of processes, and according to the dispatching as shown, CPU1, CPU2 and CPU3 constitute one group, and CPU4 belongs to another group. When using a UNIX-like OS (UNIX is a trademark of AT&T), a PPID ( Parent Process Identifier ) can be used as an group identifier.

Drawings are used in this description to make it easier to understand the embodiment, and the notations used in the drawings referred to later will now be described. Regarding "process A2w", the initial "A" indicates the group name, and the next "2" indicates the number in the group, and the following "w" indicates that the process is waiting for synchronisation. For a process not waiting for synchronisation, "r" rather than "w" is used. Processes shown surrounded by broken lines at the left hand sides of the figures are those waiting for dispatching.

The following are examples of conditions, upon each of which a process waiting for synchronisation stops its operation and requests to switch processes:

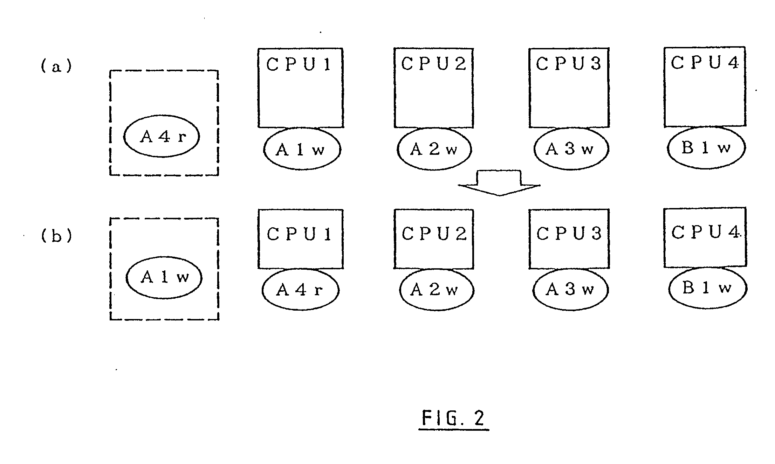

[1] If all the processors in the group of the process concerned are waiting for synchronisation and one or more processes are waiting for dispatching. See Figure 2(a).

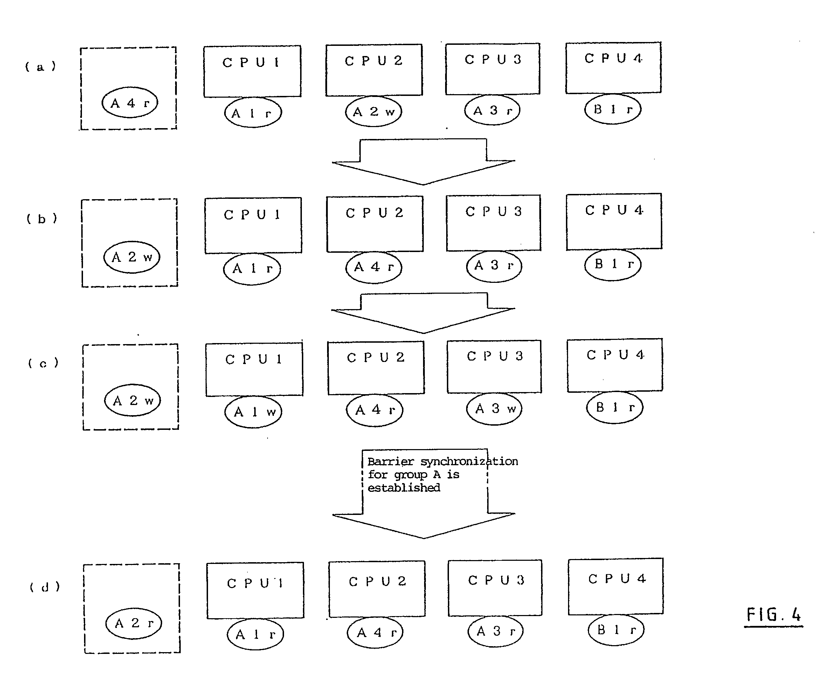

[2] If all the processes in the group of the process concerned are already dispatched to processors and waiting for synchronisation at a time. This event may occur due to programming errors (dead lock). See Figure 3.

[3] If the processor concerned is a member of a group which consists of processes performing a barrier synchronisation, and one or more members of the group is waiting for dispatching but not waiting for synchronisation. See Figure 4(a).

[4] If the number of processors waiting for synchronisation in the group of the process concerned is more than "n", and one or more processes are waiting for dispatching. "n" is a value which an OS or user can set.

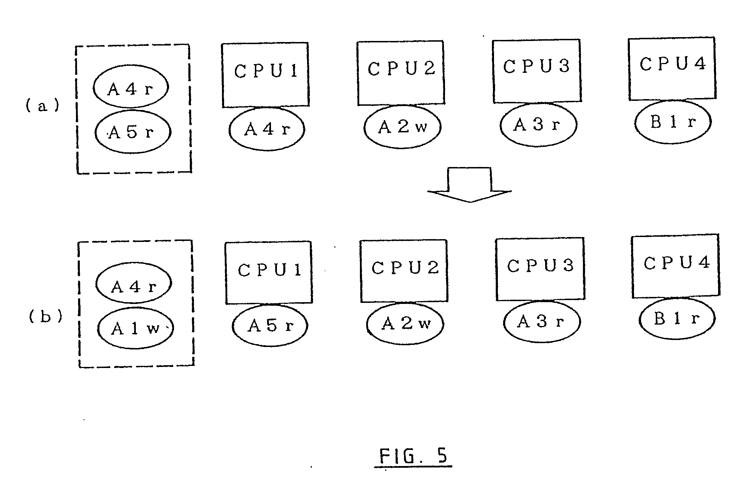

[5] If the number of processes waiting for synchronisation in the group of the process concerned is more than "n", and one or more processes in the process group of the process concerned are waiting for dispatching. See Figure 5.

Each of [1], [2] and [3] is a condition for improving the effectiveness theoretically, and each of [4] and [5] is a condition for doing the same by determining "n" heuristically, or from experience.

Depending on a running application, "n" should be adjusted in order to improve the efficiency. Regarding the conditions [4] and [5] instead of the number of processors waiting for synchronisation, the ratio of the number of processors in the group to the number of processors waiting for synchronisation in the group may be used.

Information about processor resources in the system, required for checking the above conditions are as follows.

#MGC (the number of My Group CPU's): the number of processors which belong to the group of the process concerned (the number of processes in the group of the process concerned, which are dispatched to processors).

#MWC (the number of My group Waiting CPU's): the number of processors which belong to the group of the process concerned and are waiting for synchronisation.

#MGP (the number of My Group Processes): the total number of processes belonging to the group of the process concerned.

#PRQ (the number of Processes in Run Queue): the number of processes waiting for dispatching.

#MPRQ (the number of My Group Processes in Run Queue): the number of processes waiting for dispatching in the group of the process concerned.

#MNWR (the number of My group Not waiting processes in Run queue): the number of processes waiting for dispatching but not waiting for synchronisation in the group of the process concerned.

TVPS ( Threshold value for Process Switch): the value "n" mentioned above.

These values must be referenced by a user process at a low cost and the values are placed as variables which can be accessed by both of a user and kernal (OS). Regarding protection with access privileges, only #MWC can be written by a user application process, and other values can be written by only a scheduler. The scheduler modifies these values each scheduling time as needed.

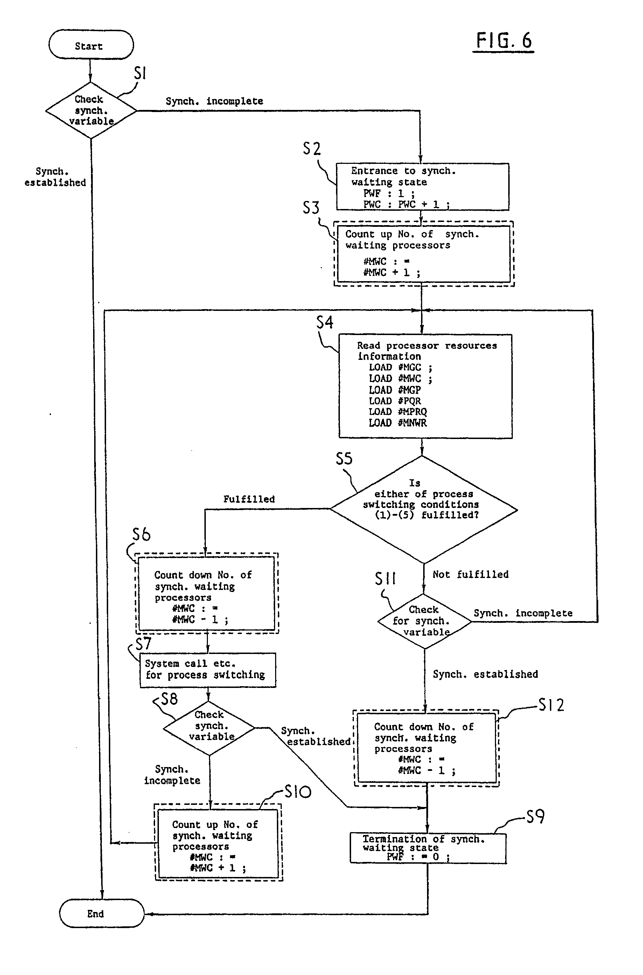

An efficient busy waiting synchronisation method is described with reference to the flow chart of Figure 6, which also comprises a step for checking conditions for switching processes described previously. Specific method and the like for checking the conditions depends on the number and variety of processes waiting for synchronisation. In this description, to facilitate understanding, one example is shown in Figure 6, and no reference is made on details.

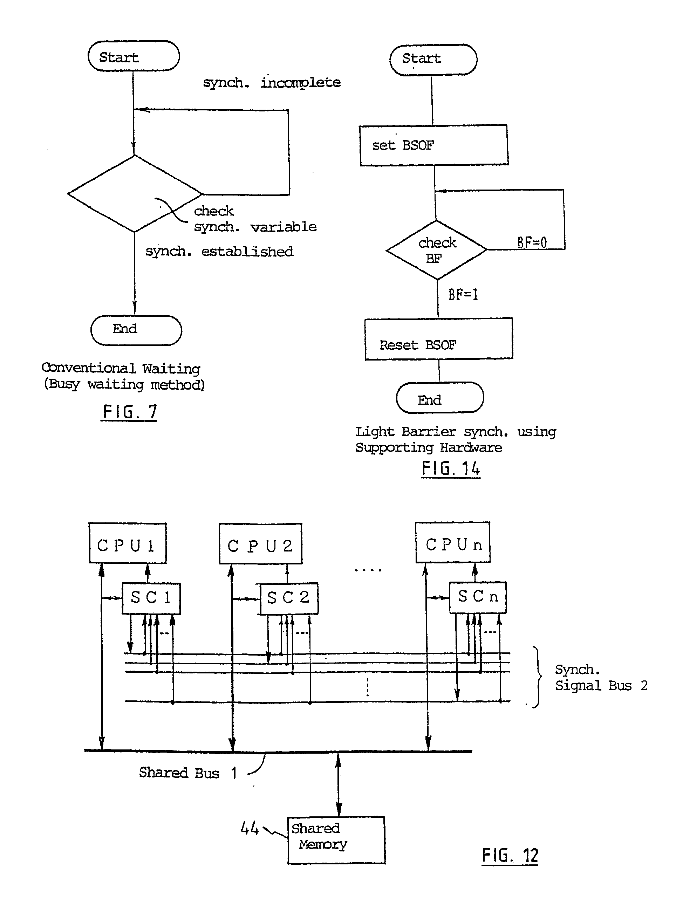

Figure 7 shows a conventional loop for waiting. In Figure 6, a synchronisation variable is checked at the beginning of the procedure (S1) in order to make an overhead as little as the conventional method, in the best condition, that is, in a case where the synchronisation is established and the synchronisation variable is then set to a value of synchronisation established before checking the synchronisation variable at first time. If the synchronisation has completed a waiting operation is immediately terminated. Only if the check at the first time indicates that synchronisation has not completed, the processor enters in a synchronisation waiting state (S2), and variables to be reflected by the entrance, for example, #MWC etc., are modified (S3). And information about system processor resources is read out (S4), determination is made of whether or not the process concerned should be terminated and the scheduler should be requested to re-schedule processes depending on the above mentioned conditions (S5). If either of the conditions is fulfilled, variables to be affected are modified (S6), and the scheduler are recalled using a system call for transferring control of the processor and the like (S7). If neither of the conditions is fulfilled synchronisation variables are newly checked (S11). If synchronisation is established, the operation returns to the read-out step of processor resource information and the procedure is iterated. If the synchronisation is established, the processor concerned gets through the synchronisation waiting state, and then variables (#MWC etc.,) to be affected are modified ( S12), and the waiting operation is terminated (S9). When the process which has transferred the control of the processor is again dispatched to that or another processor, the operation joins the flow taken when neither of the conditions for process switching is fulfilled (S8, S10).

The blocks surrounded additionally by broken lines are involved with exclusive and indivisible accesses to the shared memory ( #MWC). In a system having a shared bus, those accesses are performed with lock operations. It is likewise in the following other figures.

In some hardware configurations, a problem exists in regard to concentrated access to shared variables. The problem is raised because variables about processor resources shared by processors are accessed in the most inside loop. In a system without hardware such as caches capable of keeping consistency of content ("snoopy" caches), the shared memory may be frequently accessed with a high cost, and communication contention over communication paths may be raised. That problem also exists in conventional method, in which access to synchronisation variables which are shared variables is similarly made in the most inside loop. That is not accordingly a problem caused only by the invention. In the following description, it is assumed that the system has hardware such as caches capable of keeping consistency of content.

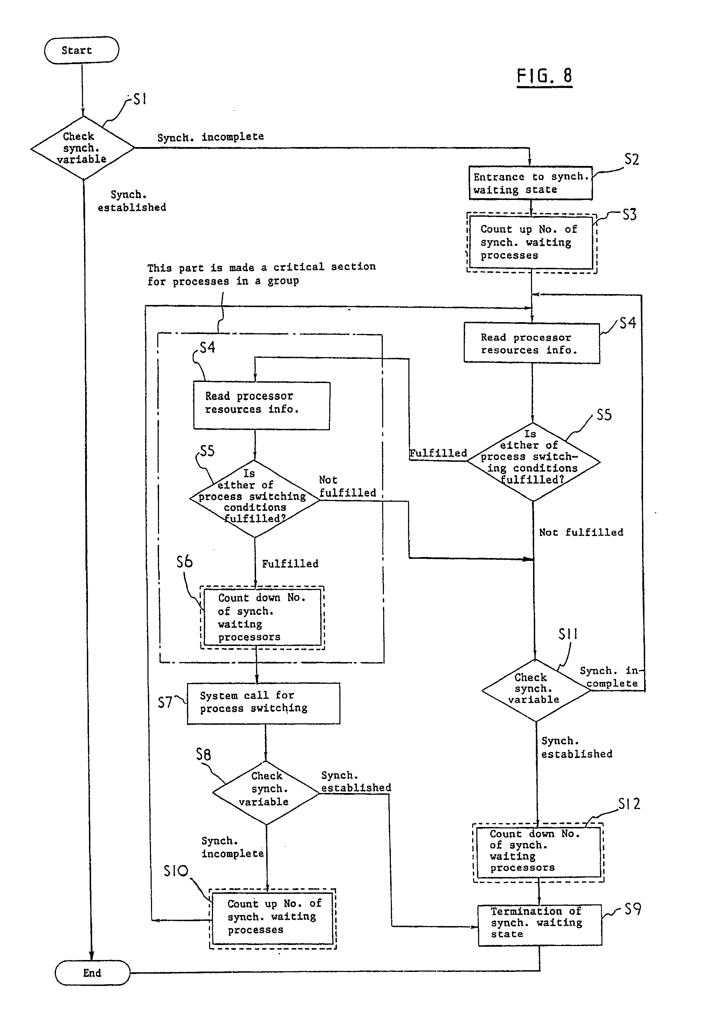

As shown in Figure 8, in a system having " snoopy" caches, a spin lock is used to suppress the need of ineffective process switching without increase of an overhead. In particular, in the method shown in Figure 6, a plurality of processes can fulfill either of the conditions of process switching at a time and many process switching requests can be then concentrated. Accordingly, as shown in Figure 8, operations requesting process switching are set as critical sections and controlled exclusively to prevent from such concentration of requests. It should be noted that if exclusive access (a bus lock etc.,) to the shared memory for exclusive control of the critical section occurs in the most inside loop of the busy waiting operation, accesses to the shared memory are concentrated and the overhead becomes large. In this regard, in the most inside loop, no critical section is provided and instead the conditions for process switching are only checked, and if the either of the conditions is fulfilled, critical section is entered to check the conditions again ( spin lock, $S4'$, $S5'$). In addition, in the method shown in Figure 8, also when the scheduler switches among processes and modifies variables about system processor resources , accesses are controlled exclusively. Detailed description is be omitted in Figure 8 as far as portions are analogous to the corresponding portions of Figure 7.

The waiting state flag ( PWF: Process Waiting state Flag) and the waiting state counter ( PWC: Process Waiting state Counter) shown in Figure 6 are prepared for each process, and using these data the scheduler calculates the value of #MNWR, and also can determine how to schedule. A detailed description will be given below.

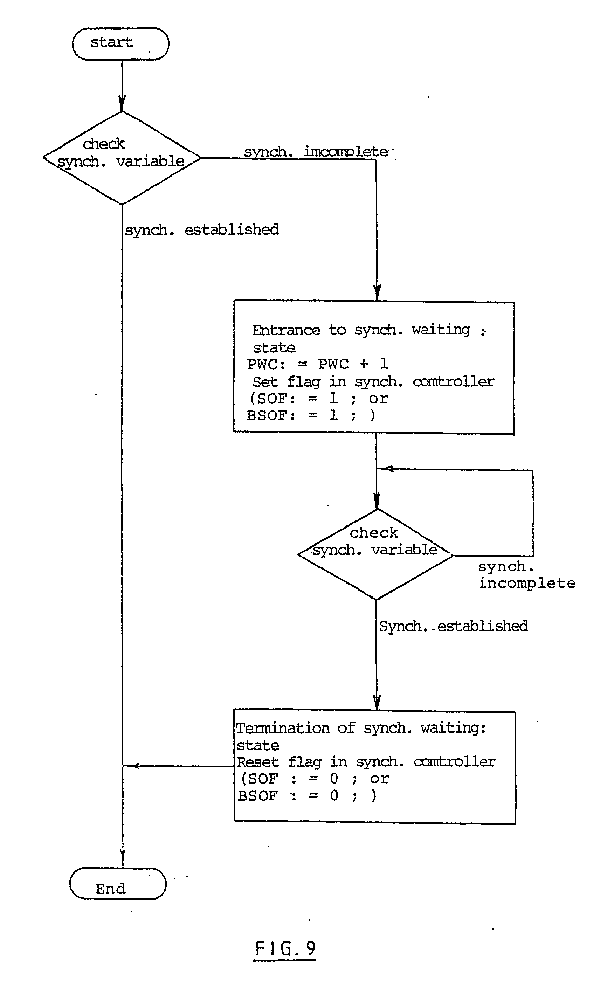

For a program having a relatively fine granularity, the new method will cause a larger overhead than the conventional methods. For example, when a group of processes require synchronisation every ten instructions and are dispatched to processors at a time, synchronisation will be established immediately after entrance to a waiting state, so that the the loop of synchronisation waiting will be performed only one or two times. The processing cost for one loop of the synchronisation waiting in the new method is, as apparent from Figures 7 and 8, higher than in the conventional ones. Therefore in the case of one or two loops performed, the overhead required for the operations beginning with synchronisation establishment( any process modifies a synchronisation variable) and ending with detection of the establishment and termination of the waiting procedure, is not negligible. To resolve this problem, a hardware mechanism can be provided which detects outside a processor whether or not the processor is in a synchronisation waiting state. As a result, the hardware mechanism can determine whether or not processes in a synchronisation waiting state should be switched and inform the processor of fulfillment of either of the conditions by interruption, and the processor can perform synchronisation waiting as shown in Figure 9. Accordingly even in the above mentioned severe case, the overhead of the new method can be comparable to the conventional methods.

Figures 2, 4 and 5 show examples of progress of rescheduling after the fulfilment of the conditions [1], [2] and [3] respectively. when a plurality of processes are waiting for dispatching, it is important in terms of efficiency which one or more processes are dispatched to processors. Further in Figure 3, a dead lock occurs in regard to the group A, so that re-scheduling should stop the performance of all the processes in the group A. Here how the scheduler performs re-scheduling is described. In addition, when more processes than processors perform together parallel processing, re-scheduling inevitably occurs, and when the granularity is fine it frequently occurs. Accordingly it is necessary to suppress the overhead due to the re-scheduling as much as possible and to make applicable to such parallel processing. A hierarchically scheduler which causes less overhead will be also described later.

The above mentioned values of waiting state flag (PWF) and waiting state counter (PWC) are data for the scheduler to calculate #MNWR and give hint to the scheduler about re-scheduling. The initial values of both are "0", and PWC indicates by "1" that the process concerned is in a waiting state, and PWC indicates the frequency that the process enters a synchronisation waiting state. Using PWF and PWC a process detects whether or not it is in the same synchronisation state as other processes. As this result, even if the condition [2] is not fulfilled, a a dead lock can sometimes be detected. For example, when all the processes in a group are in a synchronisation waiting state and all the process keep at the same synchronisation waiting state after all the processes are dispatched once to processor, this indicates a dead lock. The operation should be then terminated. Further a scheduling method can be employed which assigns a priority to one or more processes not waiting for synchronisation. For barrier synchronisation, PWCB (Process Waiting Counter for Barrier) is provided delicately. PWCB unlike PWC indicates how frequently the process performs waiting operations. That is, PWCB is modified immediately before the checking synchronisation variables at the beginning of Figure 6. When all the processes in a group keep barrier synchronisation, each synchronisation values of PWCG match with one another, so that process to be next scheduled can be determined. It should be noted that, as shown in Figure 4 (c) and (d), a process waiting for dispatching and also waiting for synchronisation, gets out of synchronisation waiting upon establishment of synchronisation. Accordingly it is required to modify #MNWR upon establishment of synchronisation.

In addition to the above, for some applications, information about the combinations of processes which are synchronised with one another frequently, etc., can be obtained in advance. Scheduling depending on information particular to each application provides better result.

Next, hierarchization of the scheduler will be described.

Scheduling is usually performed by the kernel of the OS. Hence, in order for a user process to get re-scheduling started, a system call is required to the kernel. The scheduler in the OS can not however perform adaptive scheduling for each application. In addition, the kernel of the OS and user processes share much data, so that a procedure for communication becomes complicated and the overhead also increases. Further a system call itself causes a heavy overhead, so that it is difficult to switch among processes lightly.

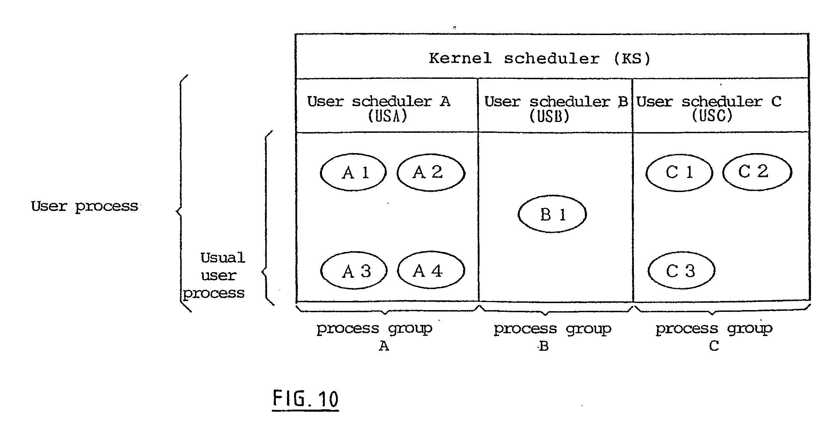

To resolve that problem, a scheduler is hierarchized. A part of scheduler for allocating real processors as conventionally is referred to as " kernel scheduler", and user schedulers are provided under the control of that kernel scheduler( see Figure 10). A user scheduler is provided for each group of processes which execute an application in cooperation with one another, and its scheduling method is determined by a user in accordance with the operation. The kernel scheduler controls whole of the real processors, and it assigns one or more real processors for each process group. Each user scheduler performs scheduling among processors assigned to it. In addition, the user schedulers don't operate in the kernel( kernel mode) but in user side ( user mode). Accordingly the user schedulers don't need system calls for process switching and then dont cause any overhead. It improves efficiency.

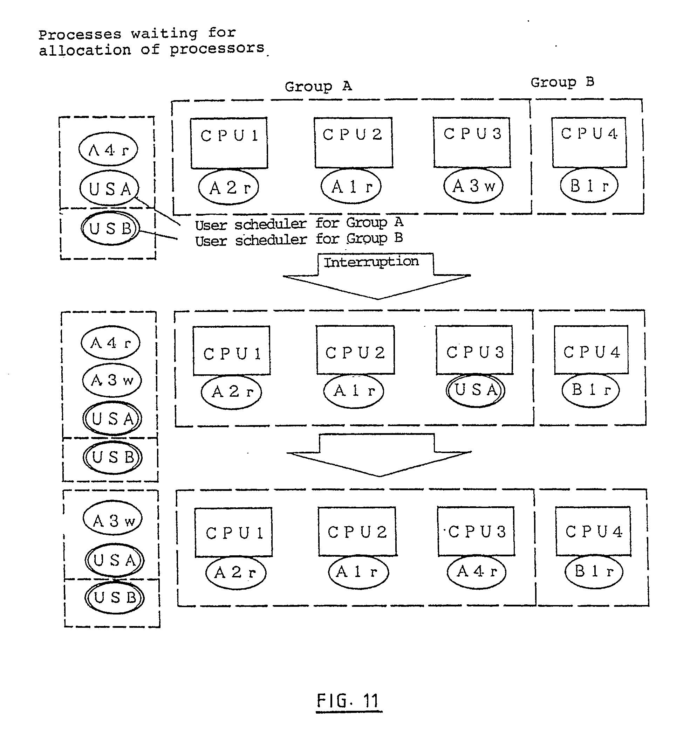

When one of the switching conditions is fulfilled, control is transferred to a corresponding user scheduler, which in turn selects one or more processes to be dispatched in accordance with a scheduling algorithm suited for the corresponding process group, and after that the control is transferred to the processes. In that way processes are switched in the group without overhead for a system call. Figure 11 shows an example where the group A performs process switching using a user scheduler based on the condition [3].

The kernel scheduler receives from each process group the number of processors which it requests, and performs scheduling in such a manner that the request from each group is satisfied as much as possible. The kernel scheduler is initiated upon timer interruption for time sharing, a system call during input/output operation of a peripheral device or a request of addition or return of processor resource from a user scheduler. When the scheduling by the kernel scheduler causes needs of one or more free processors, the processors of the lowest priority group are taken from ( preempted).

In a configuration where the determination of conditions for process switching in regard to synchronisation is implemented in hardware and a processor is informed of fulfilment of conditions by interruption, user schedulers are designed to be initiated by the interruption. In a conventional processor discriminating during operation between the kernel side and the user side, control is transferred to the kernel after the interruption. Use of such conventional processors requires that the control be returned to a user with an overhead suppressed as much as possible during that interruption. In this regard processors having hierarchical interruption function which will be described bellow, can allow interruption without overhead in a user side. That is, processors are provided with interruptions of different priorities, and some interruption of lower priorities are assigned to interruption of the user mode. Upon such interruption the control is transferred in the user mode to a routine designed by the user. The remaining types of external interruption is one to the kernel mode like conventionally. Further interruption in the user mode can be designed by switching of an interruption mask ( switching between able and disable stats of each interruption) as the user likes. When such interruption in the user mode is used for one from a synchronisation mechanism and asynchronous communication among processors in a group, control is never transferred to the kernel and an overhead then decreases. For interruption from the synchronisation mechanism, the control is designed to be directly transferred to the user scheduler.

Next the detailed configuration of the synchronisation mechanism is described. In this configuration, to suppress an overhead of a busy waiting operation, determination of conditions for process switching is implemented in hardware. The scheduler is designed as hierarchized according to the description above, and implemented in software. In the following, the hardware of the synchronisation mechanism and an operation of busy waiting used in that mechanism are mainly described.

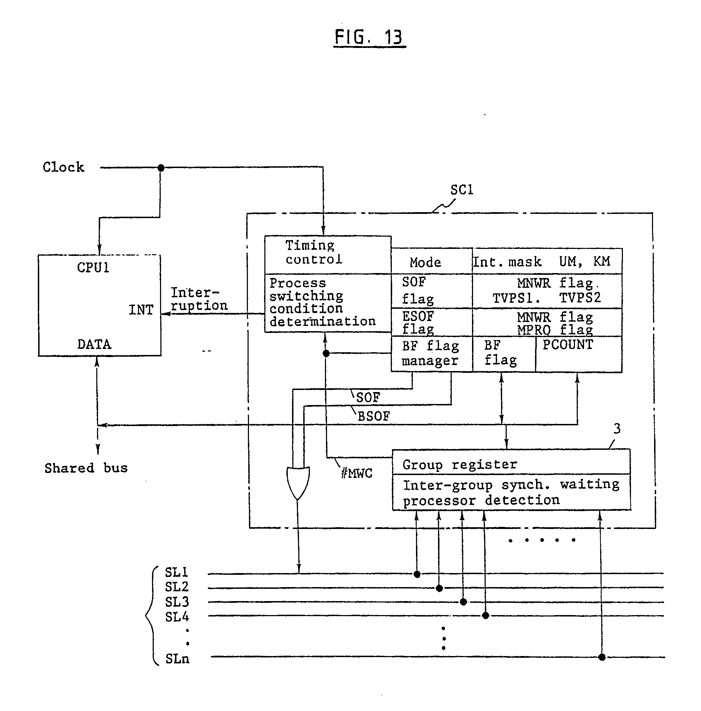

Figure 12 shows the whole configuration, in which a shared bus 1 is used as a data communication path. For processors CPU1, CPU2,.. CPUn, synchronisation controllers SC1, SC2, .. SCn are provided respectively. The synchronisation controllers are connected to a synchronisation bus 2 ( signal lines of a broad casting type) which consists of the same number of signal lines as the processors. Each processor and the corresponding synchronisation controller are connected via a data line for read/write operations of registers and flags in the controller and via an interruption line ( for the above mentioned interruption in the user mode) from the controller to the processor.

Figure 13 shows the configuration of the synchronisation controller SC1. It should be noted that other synchronisation controllers have the same configuration. In this figure, individual lines of synchronisation bus 2 are assigned to system controllers SC1, SC2, .. , SCn respectively, and each of the system controllers will output signals (binary value of "0" or "1") on only the corresponding signal line. The outputted signal is corresponding to a synchronisation output flag (SOF) in the corresponding controller or a barrier synchronisation output flag (BSOF). When SOF ( or BSOF) is set, "1" is outputted on the signal line, and when SOF ( or BSOF) is reset, "0" is outputted on the line. In the initial state, SOF and BSOF are reset, and SOF (BSOF) is set before the processor concerned enters a loop of synchronisation using the shared memory 4, and it is reset after the processor passes through the loop ( see Figure 9). Accordingly the signal line in the synchronisation bus corresponding to each processor waiting for synchronisation is set to "1". In addition, in the synchronisation controller, a group register 3 is provided for , which is set to "1" by the corresponding scheduler at the location corresponding to the processors belonging to the group of the corresponding processor. Therefore the synchronisation controller can determine whether or not each of the processors belonging to its group is in a synchronisation waiting state.

The synchronisation controller has two operation modes. The mode 1 corresponds to the above mentioned problem (1), and the mode 2 does the problem (1) in barrier synchronisation and the above mentioned problem (2) ( condition [3]). While each controller can take only one mode at a time, different modes can be taken for different group. Switching of the modes is performed using a register ( MODE) in each controller.

Registers and flags common in a group can be written simultaneously through the shared bus. That is, The scheduler can output on the shared bus a command with a group designated , and the command modifies registers in the controllers in the designated group. Likewise the scheduler can modify registers in any processor other than one connected to the scheduler.

As shown in figure 13, registers or the like which can be set in such a manner by the scheduler are group register 3, MODE, UM, KM, PRQ flag, TVPS1, TVPS2, MPRQ flag, MNWR flag and PCOUNT. Among those flags, UM and KM are interruption masks for the user scheduler and the kernel scheduler respectively. When either of them is set, interruption to the processor is prohibited. Of course the kernel scheduler can modify all the registers and flags. PRQ flag, TVPS1, TVPS2, MPRQ flag and MNWR flag are for storing information about processor resources. PRQ flag, MPRQ flag and MNWR flag correspond to #PQR, #MPRQ and #MNWR. When the count is "0", then the flag is reset, and when the count is other than "0", then the flag is set. TVPS1 ( or TVPS2) is a register for setting a value to be compared to the value of #MWC for the conditions [1], [2], [4] and [5]. For example, in oder to check the conditions [1] or [2], h1 is set by #MGC. PCOUNT is a counter for counting occurrence of preempting of processes in a group by the kernel. The counter is counted up when the kernel scheduler preempts, and it is counted down when the user scheduler operates for the preempting. Accordingly the controller can keep enough information about the occurrence of preempting and prevents from operating erroneously.

First, operation in mode 1 will be described. As mentioned above, the controller has registers or the like for storing information about processor resources, and the scheduler set values for the registers or the like. For #MWC the synchronisation controller monitors the synchronisation bus and keeps informed. The above mentioned conditions [1] to [5] about the system status are checked by the hardware mechanism, and upon the fulfilment of either of the conditions an interruption signal is outputted to the processor, and re-scheduling by the OS is requested.

Next, operation in mode 2 is described. In addition to the above mentioned registers and flags, a read only barrier synchronisation establishment flag ( BF) is provided for in the synchronisation controller. It should be noted that the scheduler can perform a read/write operation without side effect. The BF flag is set "0" when the MNWR flag is reset ( "0"), PCOUNT is "0", and all the processors in the group of the process concerned are waiting for synchronisation. After the processor reads "1" from the flag, the controller performs the following operation and automatically resets the flag. First, the controller makes its synchronisation line and BSOF to "0", and when MPRQ flag is not "0" then MNWR flag in the controller is set to "0". After that BF flag is reset. The program uses that BF flag for waiting. Although in the mode 1 BSOF is set and the synchronisation line is "1", in the mode 2 . like automatic resetting of BSOF, BF flag is automatically set upon the first reading immediately after the establishment of the synchronisation. Accordingly there is no need to set the BF in the busy waiting operation. Likewise the count-up of PWCB can be automated. The waiting operation is accordingly as shown by the flow chart of Figure 14. To prevent from erroneous operations during creation or deletion of processes by the scheduler, the following control scheme is implemented. For example, when processes are created to participate a barrier synchronisation, MNWR flag in the controller is set "1" to prohibit from interruption, and after all the processes are created, a correct MNWR flag is set and an interruption is allowed. Further the synchronisation controller checks for the condition [3] and generates interruption to the processor to switch processes when the condition is fulfilled. It should be noted that when PCOUNT is other than "0" the same control scheme is implemented as #MNWR flag is not "0", and an erroneous operation is prohibited.

The registers in the controller SC1, SC2, .., and SCn are modified as required each time processes are switched, and SOF, BSOF, BF, MNWR flags and the like of each controller the processor of which is about to change processes, are kept behind before that change, and when the previous process is dispatched again in future, the kept values are used to set the flags again.

In the system described above, when processes executed in synchronisation with one another on a multiprocessor system are dispatched to real processors simultaneously, an overhead is very small, and further even when all of the processes can not be dispatched simultaneously due to the limited number of processors and scheduling methods, the processor resources are used efficiently.

**Claims**

1. A process synchronisation method for a multiprocessor system having a plurality of processors and a shared memory, wherein each process checks for one or more synchronisation variables stored in said shared memory while that process remains in a synchronisation waiting state, said process stopping said synchronisation waiting state when said variables indicate establishment of said synchronisation, and said process continuing said synchronisation waiting state when said variables indicate non-completion of said synchronisation, characterised in that each of said processes further performs the following steps while that process remains in said synchronisation waiting state:
accessing information related to processor resources stored in said shared memory, to determine whether or not one or more predetermined conditions in respect to difficulties in establishment of synchronisation is fulfilled;

continuing said synchronisation waiting state when none of said conditions is determined to be fulfilled; and,

requesting re-scheduling when one or more of said conditions is determined to be fulfilled.

2. A multiprocessor system wherein synchronisation among processes executed on a plurality of processors is performed through each of said processes checking for one or more synchronisation variables stored in a shared memory, characterised by:

requesting means for each of said processors for accessing, while a process executed on said processor remains in a synchronisation waiting state, information related to processor resources stored in said shared memory, to send a re-scheduling request when one or more predetermined conditions in respect to difficulties in establishment of said synchronisation is fulfilled; and,

scheduling means responsive to said re-scheduling request for performing re-scheduling of processes.

3. A multiprocessor system as claimed in claim 2, further comprising memory means for each of said processors for receiving said information related to processor resources and storing the same.

4. A multiprocessor system as claimed in claim 2 or claim 3, further characterised in that said information includes information about assignment of one or more of said processes to one or more of said processors, information about grouping of said processes, and information about one or more of said processes waiting for synchronisation.

5. A multiprocessor system as claimed in any of claims 2 to 4 further characterised in that the plurality of processors operate according to a single operating system, and said scheduling means operates independently of the operating system, whereby control is not transferred to said operating system upon said re-scheduling request.

6. A multiprocessor system as claimed in claim 5, further characterised in that said requesting means sends an external interruption signal of a low priority level to its corresponding processor, and said processor performs re-scheduling in response to said external interruption signal of said low priority level, without transferring control to the operating system.

7. A multiprocessor system as claimed in any of claims 2 to 6, further characterised in that said processors each have private caches and access content of said shared memory through said private caches.

8. A multiprocessor system as claimed in any of claims 2 to 6, further comprising:

first memory means for each of said processors for receiving information related to processor resources stored in said shared memory and storing the samee;

second memory means for each of said processors for storing designation of other processors to be synchronised with said processor;

a synchronisation signal bus interconnecting the processors, for transferring synchronisation information between the processors;

signal receiving means for each of said processors for receiving synchronisation signals corresponding to each of the other processors from the synchronisation signal bus;

determining means for each of said processors, responsive to that processor's first and second memory means and signal receiving means, for determining, while a process executed on that processor remains in a synchronisation waiting state, whether or not any of the other processors to be synchronised with that processor is out of a synchronisation waiting state and is waiting for dispatching whereby synchronisation is not established;

requesting means responsive to the determining means for issuing a re-scheduling request when the determining means determines that synchronisation is not established; and

means responsive to said requesting means for performing re-scheduling.

EP 0 425 320 A2

Multiprocessor

| A 4 | CPU1 processor | CPU2 processor | CPU3 processor | CPU4 processor |
| waiting for dispatching | A 1 | A 2 | A 3 | B 1 |

FIG 1

| B 3 r | CPU1 | CPU2 | CPU3 | CPU4 |
| | A 1 w | A 2 w | B 1 r | B 2 r |

FIG. 3

EP 0 425 320 A2

(a)

| | CPU 1 | CPU 2 | CPU 3 | CPU 4 |
|---|---|---|---|---|
| ( A 4 r ) | ( A 1 w ) | ( A 2 w ) | ( A 3 w ) | ( B 1 w ) |

(b)

| | CPU 1 | CPU 2 | CPU 3 | CPU 4 |
|---|---|---|---|---|
| ( A 1 w ) | ( A 4 r ) | ( A 2 w ) | ( A 3 w ) | ( B 1 w ) |

FIG. 2

FIG. 4

(a)

| | CPU1 (A1 r) | CPU2 (A2 w) | CPU3 (A3 r) | CPU4 (B1 r) |
| A4 r | | | | |

(b)

| | CPU1 (A1 r) | CPU2 (A4 r) | CPU3 (A3 r) | CPU4 (B1 r) |
| A2 w | | | | |

(c)

| | CPU1 (A1 w) | CPU2 (A4 r) | CPU3 (A3 w) | CPU4 (B1 r) |
| A2 w | | | | |

Barrier synchronization for group A is established

(d)

| | CPU1 (A1 r) | CPU2 (A4 r) | CPU3 (A3 r) | CPU4 (B1 r) |
| A2 r | | | | |

FIG. 5

FIG. 6

```
        ┌──────────┐
        │  Start   │
        └────┬─────┘
             │        S1
             ▼
          ╱◇◇◇╲
        ╱ Check  ╲        Synch. incomplete
       ◇  synch.  ◇──────────────────────────┐
        ╲ variable╱                           │
          ╲◇◇◇╱                               │
             │                         S2      │
   Synch.    │                                 ▼
 established  │              ┌─────────────────────────────┐
             │              │ Entrance to synch.          │
             │              │ waiting state               │
             │          S3  │    PWF : 1 ;                │
             │              │    PWC : PWC + 1 ;          │
             │              └─────────────────────────────┘
             │              ┌ ─ ─ ─ ─ ─ ─ ─ ─ ─ ─ ─ ─ ─ ─ ┐
             │                Count up No. of  synch.
             │              │ waiting processors          │
             │                                              
             │              │   #MWC : =                  │
             │                  #MWC + 1 ;                  
             │              └ ─ ─ ─ ─ ─ ─ ─ ─ ─ ─ ─ ─ ─ ─ ┘
             │                             │
             │   ┌─────────────────────────┼──────────────────────┐
             │   │                  S4      ▼                      │
             │   │              ┌─────────────────────────────┐   │
             │   │              │ Read processor resources    │   │
             │   │              │ information                 │   │
             │   │              │    LOAD #MGC ;             │   │
             │   │              │    LOAD #MWC ;             │   │
             │   │              │    LOAD #MGP              │   │
             │   │              │    LOAD #PQR              │   │
             │   │              │    LOAD #MPRQ             │   │
             │   │              │    LOAD #MNWR             │   │
             │   │              └─────────────────────────────┘   │
             │   │                          │   S5                 │
             │   │                          ▼                      │
             │   │                      ╱◇◇◇◇◇╲                   │
             │   │     Fulfilled      ╱    Is     ╲                │
             │   │  ┌─────────────── ◇ either of process ◇         │
             │   │  │                 ╲ switching conditions╱      │
             │   │  │                   ╲(1)-(5) fulfilled?╱       │
             │   │  │  S6                 ╲◇◇◇◇◇◇╱                │
             │   │  │                          │ Not fulfilled     │
             │   │  ▼                    S11    ▼                   │
             │   │ ┌ ─ ─ ─ ─ ─ ─ ─ ┐        ╱◇◇◇╲                 │
             │   │  Count down No. of       ╱Check ╲   Synch.      │
             │   │ │synch. waiting  │      ◇  for   ◇ incomplete   │
             │   │  processors            ╲ synch. ╱───────────────┘
             │   │ │  #MWC : =      │       ╲variable╱
             │   │    #MWC - 1 ;             ╲◇◇◇╱
             │   │ └ ─ ─ ─ ─ ─ ─ ─ ┘            │
             │   │       │ S7                    │ Synch. established
             │   │       ▼                       ▼
             │   │ ┌──────────────┐     ┌────────────────────────┐
             │   │ │System call etc.│    │ Count down No. of   S12│
             │   │ │for process    │    │ synch. waiting        │
             │   │ │switching      │    │ processors            │
             │   │ └──────────────┘     │   #MWC : =           │
             │   │       │ S8           │   #MWC - 1 ;         │
             │   │       ▼              └────────────────────────┘
             │   │    ╱◇◇◇╲  Synch.              │
             │   │  ╱ Check ╲ established         │
             │   │ ◇  synch.  ◇──────┐           │
             │   │  ╲variable╱       │           │  S9
             │   │    ╲◇◇◇╱         │           ▼
             │   │       │           │  ┌──────────────────────┐
             │   │ Synch.│           │  │ Termination of synch.│
             │   │incomplete  S10    │  │ waiting state        │
             │   │       ▼           │  │    PWF : = 0 ;      │
             │   │ ┌ ─ ─ ─ ─ ─ ─ ┐  │  └──────────────────────┘
             │   │  Count up No. of  │           │
             │   │ │synch. waiting │  │           │
             │   └─│processors     │  │           │
             │      #MWC : =      │              │
             │     │ #MWC + 1 ;    │              │
             │     └ ─ ─ ─ ─ ─ ─ ┘              │
             │                                    │
             ▼                                    │
        ┌──────────┐                              │
        │   End    │◄─────────────────────────────┘
        └──────────┘
```

15

Start

synch. incomplete

check
synch. variable

synch. established

End

Conventional Waiting
(Busy waiting method)

FIG. 7

Start

set BSOF

check
BF

BF=0

BF=1

Reset BSOF

End

Light Barrier synch. using
Supporting Hardware

FIG. 14

CPU1    CPU2    . . . .    CPUn

SC1    SC2    SCn

Synch.
Signal Bus 2

Shared Bus 1

44    Shared
Memory

FIG. 12

FIG. 8

Start

Check synch. variable — S1

Synch. incomplete →

Synch. established

Entrance to synch. waiting state — S2

Count up No. of synch. waiting processes — S3

This part is made a critical section for processes in a group

Read processor resources info. — S4

Read processor resources info. — S4

Is either of process switching conditions fulfilled? — S5

Is either of process switching conditions fulfilled? — S5

Not fulfilled

Fulfilled

Fulfilled

Not fulfilled

Count down No. of synch. waiting processors — S6

Check synch. variable — S11

Synch. incomplete

System call for process switching — S7

Check synch. variable — S8

Synch. established

Synch. established

Synch. incomplete

Count down No. of synch. waiting processors — S12

Count up No. of synch. waiting processes — S10

Termination of synch. waiting state — S9

End

start

check
synch. variable

synch. imcomplete

synch. established

Entrance to synch. waiting :
state
PWC: = PWC + 1
Set flag in synch. comtroller
(SOF: = 1 ; or
BSOF: = 1 ; )

check
synch. variable

synch.
incomplete

Synch. established

Termination of synch. waiting:
state
Reset flag in synch. comtroller
(SOF : = 0 ; or
BSOF : = 0 ; )

End

FIG. 9

| Kernel scheduler (KS) | | |
|---|---|---|
| User scheduler A (USA) | User scheduler B (USB) | User scheduler C (USC) |
| (A 1) (A 2)  (A 3) (A 4) | (B 1) | (C 1) (C 2)  (C 3) |

User process

Usual user process

process group A     process group B     process group C

FIG. 10

Processes waiting for
allocation of processors

FIG. 11

## FIG. 13